Europäisches Patentamt

European Patent Office

Office européen des brevets

(19)

(11) Publication number: **0 262 109 B1**

# EUROPEAN PATENT SPECIFICATION

(12)

(45) Date of publication of patent specification: **15.04.92**   (51) Int. Cl.5: **H04N 7/13**

(21) Application number: **87850284.8**

(22) Date of filing: **21.09.87**

(54) **Method for representing moving pictures.**

(30) Priority: **23.09.86 SE 8603999**

(43) Date of publication of application:
**30.03.88 Bulletin 88/13**

(45) Publication of the grant of the patent:
**15.04.92 Bulletin 92/16**

(84) Designated Contracting States:
**BE CH DE FR GB LI NL**

(56) References cited:

PROCEEDINGS OF THE IEEE, Vol. 69, No. 3 March 1981, p. 349-389, New York, USA, ANIL K. JAIN "Image Data Compression: A Review".

IEEE TRANSACTIONS ON COMMUNICATIONS, Vol. Com-32, No. 3, March 1984, p. 280-287, New York, USA, NOAKI MUKAWA et al: "An Interframe Coding System for Video Teleconferencing Signal Transmission at a 1.5 Mbit/s Rate"

IEEE TRANSACTIONS ON COMMUNICATIONS, Vol. COM-32, No. 8, August 1984, p.954-968, New York, USA, SHAKER SABRI: "Movement Compensated Interframe Predic-

tion for NISC Color TV Signals".

(73) Proprietor: **Kronander, Torbjörn
Nedre Tolfstorp, Slaka
S-585 90 LINKÖPING(SE)**

(72) Inventor: **Kronander, Torbjörn
Nedre Tolfstorp, Slaka
S-585 90 LINKÖPING(SE)**

(74) Representative: **Willquist, Bo Lorentz
PATS Willquist Patents S:t Larsgatan 29
S-582 24 Linköping(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 262 109 B1

## Description

The present invention relates to a method for representing moving pictures described as a three-dimensional signal, in which one of the dimensions is time and both the other two are spatial dimensions, and where the signal is split into sub-bands, each sub-band consisting of one or more spatial degrees of freedom, for example sequency and/or frequency bands and the sub-bands are processed in a number of paralled channels.

For transmission or storage of picture sequences, analog representation has for the most part dominated. Such representation has been effected either through magnetic storage, such as video tape/disk, or by chemical means, for example as a sequence of photographic pictures. Of late however there has been a growing interest in the digital representation of moving pictures. The quantity of data required for digitization is very large. This is mainly due to the fact that stored data comprises a great deal of redundancy, in other words, the representation contains more data than is needed solely to represent the information contained in the pictures.

In attempts to compensate this, a complete technology, picture coding, has appeared on the scene; it aims at a more efficient representation of pictures, preferably in digital form. The known methods used for this task are for the most part based on statistical reasoning; examples are DPCM (Differential Pulse Code Modulation) and transform coding methods. The following discussion deals with black and white pictures only; however the same line of reasoning can be applied to colour pictures.

Statistical methods allow picture data to be compressed by a factor of 2 to 4 with no distortion at all. Further compression requires an acceptance of a certain amount of information distortion. Picture coding to a great extent concerns how to select the distortion. This selection too can be based on statistical reasoning. A very easy way however would be simply to show each 24th frame of an ordinary movie, in other words one picture per second. Distortion would then be considerable and an observer would find it very irritating. Not until we reach a picture frequency of around 12 Hz or more does distortion begin to be acceptable.

Since a moving sequence elementally can be regarded as a signal in three dimensions, time plus two space dimensions, it is even possible to perform similar operations in the picture plane, and these can be regarded as uncomplicated methods for reducing the resolution of the picture. However these operations too will give rise to a great deal of distortion where the observer is concerned.

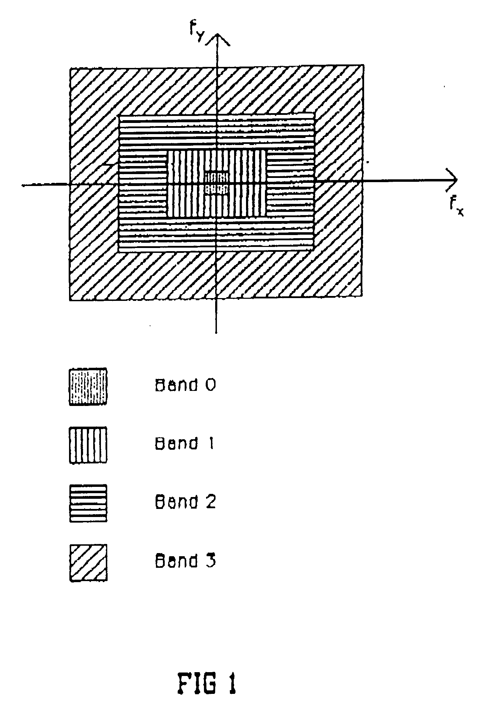

Many methods have been proven to reduce the redundancy in picture data representation; of these we can mention the so-called hierarchical methods. These are based on a initial splitting of the picture into sequence and/or frequency bands, in other words sub-bands or groups of spatial degrees of freedom, and an assignment of digital representation to each individual sub-band. Figure 1 shows an example of such an arrangement. We have in the example chosen to split the signal into four sub-bands, bands 0 to 3. US A 4,447,886 describes a hierarchical method where the coding of a picture in a sequence begins by transforming the lower frequencies and thereafter continuing with the higher ones. The problem here is that the method does not guarantee that the higher frequencies will be updated at all. If a picture sequence contains a great deal of movement, a situation can arise whereby the low frequencies occupy the entire data area. In other words, sampling of high frequencies is not uniform, and dependent only upon picture content and the data transmission rate that is selected.

Another method that is discussed is to study the receiving end where the picture will fin ally be observed, this is, in most cases, the human faculty of vision. This faculty substantially reduces picture information. By attempting to eliminate precisely that type of information which will not be perceived by the human observer, in a stage as early as the transfer or storage stage, we would theoretically not contribute to any distortion at all where the observer is concerned. As an alternative we can, in cases where the demand for compression is very great, eliminate also information which is least significant for the observer's interpretation of the pictures. In the latter case it is not a primary goal to obtain a minimal distortion in picture transmission or storage, but rather to remove the parts which are not relevant for coherence.

The human eye can track the movement of an object. If, in coding of moving pictures, one wishes to take consideration to the functioning of the observer's visual system, the problem arises that a sequence of pictures which for an observer with a fixed focus of attention contains high temporal frequencies, ie varies rapidly in time, can by tracking come to contain only low temporal frequencies. The reason for this is that the act of visually following an object can cause it to appear nearly stationary on the retina.

A primary object of the present invention is to achieve a method to remove the kind of information which is defined both through its spatial properties, ie in the picture plane, and also through its temporal properties; this to enable, firstly, removal of information which cannot be perceived by human vision, and secondly, to enable selection of information which is for an observer significant. This is achieved according to the present invention in that at least one of the aforementioned spacial sub-bands are subjected to a temporal band-width reduction (Ti) whereby the temporal band-width reduction of at least one of the spatial sub-bands is distinguished from the corresponding temporal band-width reduction of the other spatial sub-bands.

Another important object of the present invention is to reduce the effect of the ability of the human eye to follow an object, a feature which in the coding process can cause difficulties in utilizing the human eye's spatio-temporal properties. A special feature of the invention achieves a reduction of this effect in that, prior to the temporal band-width reduction of the spatial sub-bands, and prior to or after division of the original image signal (I) into spatial sub-bands, a motion compensation is applied to the spatial sub-bands, which means in effect that components of the image signal corresponding to one given time instant are moved within the image signal in directions that vary in time and space but which are restricted to the plane defined by the spatial dimensions

Still another important object of this invention is to achieve a method for changing the average sampling interval for at least one of the sub-bands during decoding. This is achieved by yet another special feature of the invention in that a temporal interpolation is applied consisting of a temporal upsampling together with a temporal filtering upon the different spatial sub-bands, where it is true for at least one of the spatial sub-bands that temporal interpolation causes a reduced average sampling interval, alternatively gives a time-continuous signal, and that the temporal filter transfer function of at least one spatial sub-band is distinct from the corresponding magnitudes of the other spatial sub-bands.

The following describes the invention in more detail with reference to the appended drawing in which aforementioned Figure 1 shows a typical known sub-band splitting viewed in the spatial frequency plane. Figure 2 is a flow chart exemplifying the method put forth by the invention, based on the fact that each and every one of the sub-bands obtained by a splitting in the spatial dimensions is subjected to a temporal filtering and sampling, and in some cases a resampling if the original signal is time-discrete. Figure 3 is a flow chart exemplifying an extension of the method put forth by the invention, based on a motion compensation according to patent claim 2.

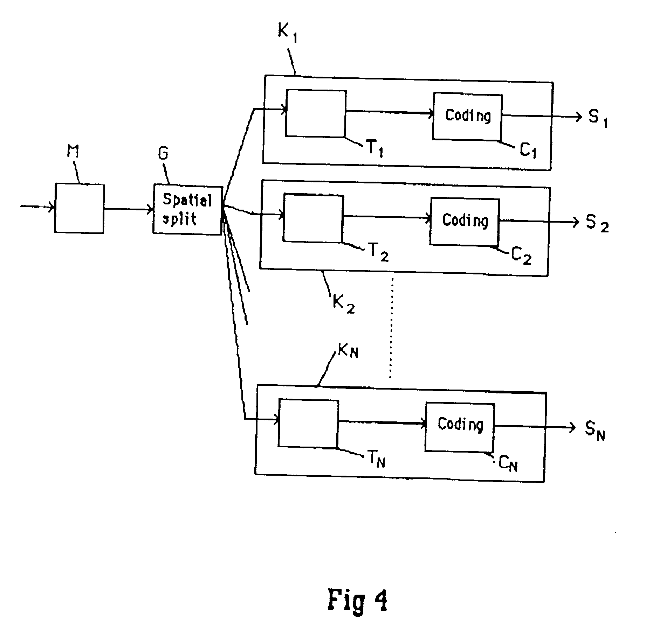

Figure 4 is still another example of a flow chart which exemplifies an extension of the method put forth by the invention based on a motion compensation equivalent to patent claim 3 and constituting an alternative to motion compensation as expressed in patent claim 2.

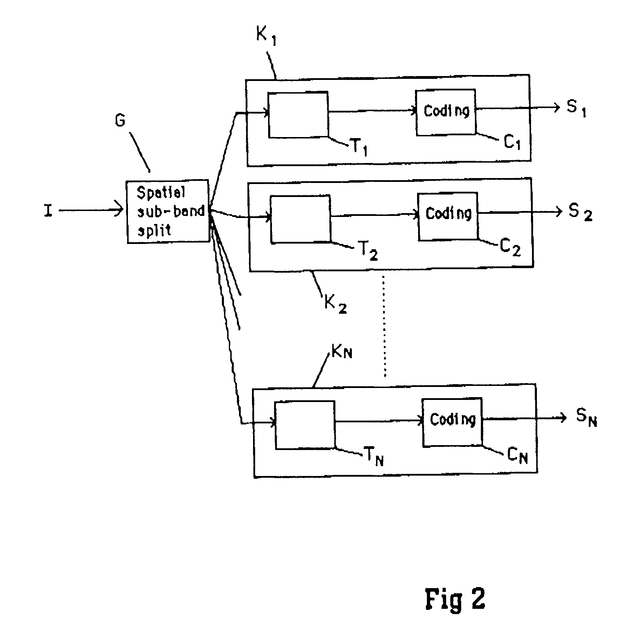

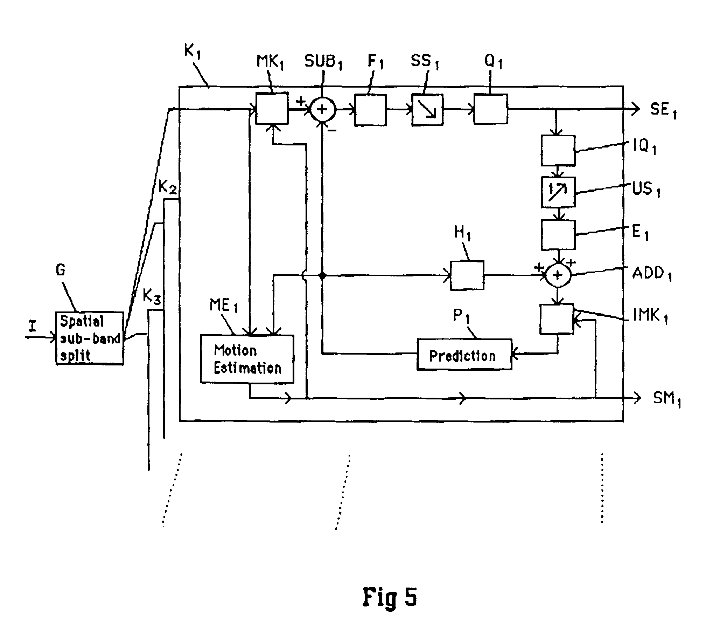

Figure 5 is a still more detailed flow chart and exemplifies the method according to patent claim 2. The figure exemplifies moreover a possible change of the coding methods expressed by Figures 2 and 4.

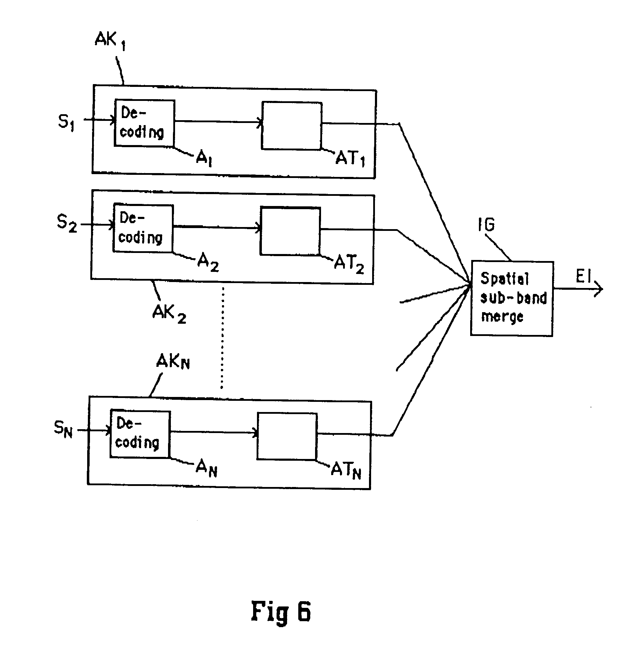

Figure 6 is an example of a flow chart which exemplifies the decoding of signals that constitute a representation of a picture signal, where the representation is created by any of the above-mentioned coding methods. The figure exemplifies a temporal interpolation according to patent claim 4.

Point 1 in Figure 2 denotes a splitting of an input signal, I, into sub-bands. This splitting is accomplished by a known method such as through splitting into sequence and/or frequency bands as described in Figure 1. More detailed information on how to split signals into sub-bands is found in several sources among them the following references: P-J Burt and E.H. Adelsson "The Laplacian Pyramid as a Compact Image Code", IEEE tr. comm. COM-31(4):532-540,1983; T. Kronander "Sampling of Bandpass Pyramids", Rapport Linköpings Universitet, Institutionen för systemteknik (Report - Linköping University, Dept of Electrical Engineering, Sweden) LiTH-ISY-I-0780, 1986; M. Vetterli "Multi-Dimensional Sub-band Coding: Some Theory and Algorithms.", Signal Proc.(6):97-112, 1984, and in the previously mentioned US patent. The sub-bands obtained through splitting are thereafter processed in a number of parallel channels K1 to KN where N denotes the number of channels. Each such channel comprises firstly, a temporal operation T1 to TN, and secondly, a coding C1 to CN. For each sub-band, the temporal operation constitutes a temporal filtering and/or a temporal sampling. The temporal filtering is preferably performed as a low-pass filtering. The temporal sampling can be performed as a resampling of a currently time-discrete signal, or as a sampling of a time-continuous signal. In accordance with the present invention, these operations are not identical for channels K1 to KN. The difference between one channel and the other channels can, for example, be that the transfer function of the filtering and/or the interval of the sampling of one or more channels differ from the corresponding parameters of the functions or intervals compared. As a result of the aforementioned coding and the temporal operation, the output signals S1 to SN are obtained from each channel. These signals jointly compose a representation of the input signal I.

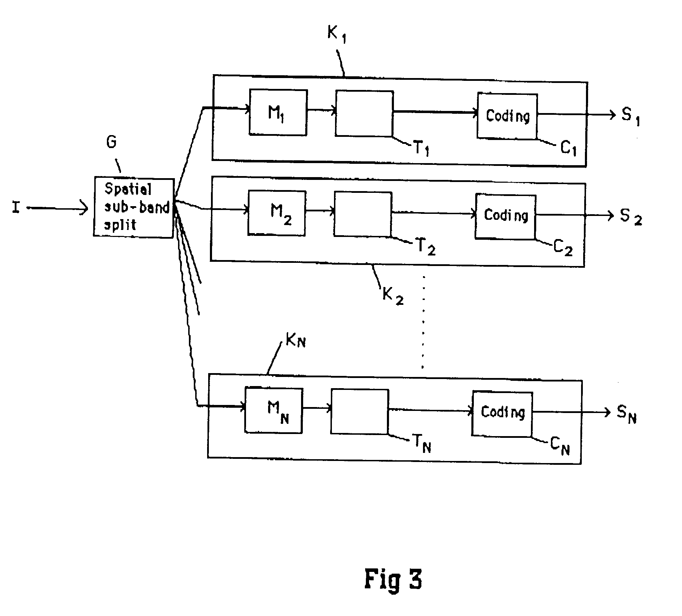

Figure 3 utilizes the same denotations as in those in Figure 2 for equivalent or analog functions. In each respective channel K1 to KN, a motion compensation has been introduced, M1 to MN. The motion compensation implies a movement of the picture components within the picture itself, in directions that vary in time and space but which are restricted to the plane defined by the spatial dimensions.

The meaning of this is that components of the picture, for example rectangular areas which make up parts of each frame/field in a picture sequence, are moved so as to as far as possible neutralize the effect of motion in the picture sequence. The motion compensation is assumed to possibly encompass a motion estimation, in order to determine the direction of the movement . Moreover it will likely be advantageous but not essential to, in the representation of the picture sequence according to the present invention, also incorporate a vector field which describes the motion compensation.

Figure 5 below provides a more detailed exemplification than does Figure 3, one of many possible realizations of a coding technique in compliance with these principal features.

An alternative coding method is obtained, according to a special feature of the invention, by relocating the motion compensation M, to a position preceding the splitting into groups of sub-bands, G. Figure 4 provides an overview of this coding technique. The nomenclature previously used also applies here. The same constraints apply for motion compensation as for the method exemplified in Figure 3.

It is obvious that the temporal operations as well as the coding operations K1 to KN, in Figures 2 through 4, in conformity with the description below with reference to Figure 5, can be summarized in a single operation, for example by using temporal filtering/sampling in a feedback loop incorporated in the coding. The blocks Ki can in other words be merged with blocks Ti, without changing the method put forth by the present invention; the subscript i denotes here any number between 1 and N.

Figure 5 exemplifies a coding technique in accordance with the present invention, which is based on feedback coding. The input signal I is assumed here to be time-discrete and consequently to consist of a sequence of still pictures. The coding is, in principle, analogous with the method illustrated in Figure 3, whereby the temporal operation and coding are merged in a feedback loop, in which the following operations are included:

SUBi = Subtract one signal from another
Fi = Temporal filtering
SSi = Subsampling
Qi = Quantization
IQi = Inverse quantization
USi = Upsampling (interpolation)
Ei = Temporal filtering
ADDi = Add one signal to another
IMKi = Inverse motion compensation

Pi = Prediction
Hi = Temporal filtering

The sub-bands, G, obtained through splitting the picture signal I, are processed as previously described, in a number of parallel channels K1 to KN. In each channel Ki, and for each frame/field in the picture sequence, there occurs, firstly a motion estimation, MEi and secondly a motion compensation MKi. The result of the motion estimation is established to control the motion compensation in a way which in itself is known. When the motion compensation has been performed, a subtraction SUBi takes place, wherein the prediction Pi, obtained during the processing of the immediately prior frame/field in the sequence, is subtracted from the result of the motion compensation. The subtraction gives us a prediction error which is to be coded. This is done through a temporal filtering Fi, followed by a corresponding subsampling SSi. This in turn is followed by quantization Qi, by some known method, for example uniform quantization followed by entropy coding. We have now obtained a part, SEi, of the code which represents the picture signal in the current sub-band. In order to create a prediction for the next picture, we now need to know the picture which a receiver would have created. Reference is here made to known methods for feedback coding as described in, for example, S Ericsson "Fixed and Adaptive Predictors for Hybrid Predictive/Transform Coding", IEEE tr. comm. COM-33(12):1291-1302, 1985, or T. Ericson and R. Forchheimer "Linear transformation for optimal quantization of vector processes with an application to picture coding", Rapport, Linköpings Universitet, (Report, Linköping University, Sweden), LITH-ISY-I-0449, 1981.

To create this picture, an inverse quantization IQi is now performed. This is dependent upon the selected quantization algorithm, but can, for example, be a pure identity mapping whereupon the block consequently does not perform any operation at all. This is followed by a so-called upsampling USi and a temporal filtering Ei. These operations are sometimes referred to collectively as interpolation and the result is that the same sampling frequency is obtained as before the subsampling SSi. This is followed by an addition ADDi by which a prediction, to which a filtering Hi may have been applied, is added all in a basically known way. It is advantageous but not essential, to perform the temporal filterings in such way that Fi and Ei are identical, and so that Hi corresponds to the filtering Fi being repeated twice. The result after the addition corresponds to the motion compensating signal prior to the subtraction SUBi. By performing some sort of inverse motion compensation IMKi, the signal Oi is created which is an encoded and decoded version of the input signal to channel Ki. This can now be used to predict the result after the motion compensation MKi, for the next frame/field in the picture sequence, either by performing this prediction without any change, or by performing certain operations on the signal Oi, for example, an optimal prediction according to known mathematical methods. The prediction includes consequently a memory function of known type which is established to store the prediction until the next picture in the input signal is processed.

Motion estimation MEi is performed to create a vector field that will control the motion compensation MKi and is carried out by comparing the input signal to the current channel Ki, with the result obtained from the processing of the previous frame/field in sequence Pi, and to thereafter, by any feasible known method, to compute said vector field. The result obtained from the motion estimate MEi is used for three purposes:

- to control the motion compensation MKi,
- to control the inverse motion compensation IMKi,
- to serve as a code, SMi, that will be included in the representation of input signal I.

In general, the motion compensation and the motion estimate, respectively, can take place independently in each sub-band, or one or both of these can be common for several, perhaps for all sub-bands. Common, in this context means that they in part use the same input data or that the same output data is used within several sub-bands.

It is obvious that Figure 5 is only one of many possible examples of how a coding in accordance with patent claim 2 can be performed. Simple modifications which lie within the scope of the invention, are, for example, to eliminate one or more of the filtering operations Fi, Ei or Hi, alternatively subsampling SSi, and upsampling USi, in the feedback loop. The coding procedure itself can also differ from that described in the figure, for example it is not necessary to use a technique with feedback structure; in accordance with Figures 2 through 4, separated structures can be utilized. Moreover, the feedback structure can be used also for the kind of coding described in Figures 2 through 4. That which according to the invention is unique for the methods exemplified by Figures 2 through 5 is that the temporal operations vary for the different sub-bands. Unlike the US patent mentioned earlier, the present invention guarantees updating of all sequency and/or frequency bands within a certain time interval, independent of the content of the picture sequence.

Figure 6 exemplifies a decoding technique in accordance with the present invention which is based on a resampling of the decoded signal. For each and every one of the channels K1 to KN, a decoding A1 to AN is performed on the code S1 to SN, which is generated by a time-discrete coding of a picture signal split into spatial sub-bands of degrees of freedom, for instance, but not necessarily, by one of the methods in accordance with Figures 2 through 5. This is followed by a temporal operation consisting of an interpolation AT1 to ATN, whereupon for at least one of the sub-bands it is true that an average temporal sampling interval is obtained that is less than that preceding the operation. This temporal interpolation is, for at least one of the sub-bands, distinguished from the corresponding operation performed on the other sub-bands. After interpolation, the various groups IG are combined to create the decoded signal EI. This combination can, for example, consist of an addition. Note that interpolation can be an identity mapping, in other words, certain of the interpolations AT1 to ATN can be without effect. It is true also for this type of decoding that the idea framework of the present invention also encompasses methods with feedback structures, and also that the motion compensation can be a component in the decoding, for example when decoding a code that has been generated according to the methods which are exemplified by Figures 3 through 5.

Moreover, both the descriptions above and the associated figures refrain from taking up certain temporal memory functions which specialists in this field find self-evident and which must accompany filtering and predictive operations.

## Claims

1. Method for representing moving pictures described as a three-dimensional signal (I), in which one of the dimensions is time and both the other two are spatial dimensions, and where the signal (I) is split into spatial sub-bands, and the spatial sub-bands are processed in a number of parallel channels, K1 through KN, characterized in that at least one of the aforementioned spatial sub-bands are subjected to a temporal band-width reduction (Ti) whereby the temporal band-width reduction of at least one of the spatial sub-bands is distinguished from the corresponding temporal band-width reduction of the other spatial sub-bands.

2. Method in accordance with claim 1, characterized in that prior to the temporal band-width reduction of the spatial sub-bands, and prior to or after division of the original image signal (I) into spatial sub-bands, a motion compensation is applied to the spatial sub-bands, which means in effect that components of the image signal corresponding to one given time instant are moved within the image signal in directions that vary in time and space but which are restricted to the plane defined by the spatial dimensions.

3. Method in accordance with claim 1, characterized in that upon decoding signals (SI through SN) corresponding to the spatial sub-bands, which together compose a time-discrete representation of the picture signal (I) there is applied a temporal interpolation (ATI through ATN) consisting of a temporal upsampling together with a temporal filtering upon the different spatial sub-bands, where it is tribe for at least one of the spatial sub-bands that temporal interpolation causes a reduced average sampling interval, alternatively gives a time-continuous signal, and that the temporal filter transfer function of at least one spatial sub-band is distinct from the corresponding magnitudes of the other spatial sub-bands.

## Revendications

1. Procédé pour représenter des images mobiles décrites sous la forme d'un signal tridimensionnel (I), dans lequel l'une des dimensions est le temps et les deux autres sont des dimensions spatiales, et selon lequel le signal (I) est subdivisé en des sous-bandes spatiales, et les sous-bandes spatiales sont traitées dans un nombre de canaux parallèles K1 à KN, caractérisé en ce qu'au moins l'une des sous-bandes spatiales mentionnées précédemment est soumise à une réduction temporelle de largeur de bande (Ti), ce qui permet d'établir une distinction entre la réduction temporelle de la largeur de bande d'au moins l'une des sous-bandes spatiales et la réduction temporelle correspondante de la largeur des bandes des autres sous-bandes spatiales.

2. Procédé selon la revendication 1, caractérisé en ce que, avant d'effectuer la réduction temporelle de la largeur de bande des sous-bandes spatiales et avant ou après la subdivision du signal d'image original (I) en des sous-bandes spatiales, on applique une compensation de déplacement aux sous-bandes spatiales, ce qui signifie en réalité que des composantes du signal d'image correspondant à un instant donné sont déplacées à l'intérieur du signal d'image dans des directions qui varient dans le temps et dans l'espace, mais qui sont limitées au plan défini par les dimensions spatiales.

3. Procédé selon la revendication 1, caractérisé en ce que, lors du décodage de signaux (SI à SN) correspondant aux sous-bandes spatiales et qui forment ensemble une représentation, discrète dans le temps, du signal d'image (I), on applique une interpolation temporelle (ATI à ATN) consistant en un suréchantillonnage temporel ainsi qu'un filtrage temporel dans les différentes sous-bandes spatiales, dans lesquelles il est vrai, pour au moins une des sous-bandes spatiales, qu'une interpolation temporelle fait apparaître un intervalle d'échantillonnage moyen réduit, ou fournit, sinon, un signal continu dans le temps, et que la fonction de transfert du filtre temporel d'au moins une sous-bande spatiale diffère des amplitudes correspondantes des autres sous-bandes spatiales.

## Patentansprüche

1. Verfahren zum Darstellen von sich bewegenden Bildern als dreidimensionales Signal (I), wobei die eine der Dimensionen die Zeit und die beiden anderen räumliche Dimensionen sind, und wobei das Signal (I) in räumliche Teilbänder zerlegt wird, und die räumlichen Teilbänder in eine Anzahl von parallelen Kanälen (KI-KN) verarbeitet werden, dadurch gekennzeichnet, daß wenigstens eines der zuvor erwähnten räumlichen Teilbänder einer zeitlichen Bandbreitenreduktion (Ti) unterworfen werden, wobei die zeitliche Bandbreitenreduktion wenigstens eines der räumlichen Teilbänder von der entsprechenden seitlichen Bandbreitenreduktion der anderen räumlichen Teilbänder verschieden ist.

2. Verfahren nach Anspruch 1, dadurch gekennzeichnet, daß vor der zeitlichen Bandbreitenreduktion der räumlichen Teilbänder, und vor oder nach der Teilung des Original-Bildsignales (I) in räumliche Teilbänder eine Bewegungskompensation bei den räumlichen Teilbändern angewandt wird, was effektiv bedeutet, daß Komponenten des Bildsignales, die einem gegebenen Zeitpunkt entsprechen, innerhalb des Bildsignales in Richtungen bewegt werden, welche bezüglich der Zeit und des Raumes variieren, die jedoch auf die Ebene beschränkt sind, die durch die räumlichen Dimensionen definiert sind.

3. Verfahren nach Anspruch 1, dadurch gekennzeichnet, daß auf Decodiersignale (SI-SN) entsprechend räumlichen Teilbändern, die zusammen eine zeit-diskrete Darstellung des Bildsignales (I) bilden, eine zeitliche Interpolation (ATI-ATN) angewandt wird, bestehend aus einem zeitlichen Upsampling, zusammen mit einem zeitlichen Filtern der verschiedenen räumlichen Teilbänder, wobei es für wenigstens eines der räumlichen Teilbänder zutrifft, daß die zeitliche Interpolation ein verringertes durchschnittliches Abtastintervall hervorruft, alternativ ein zeit-kontinuierliches Signal gibt, und daß die zeitliche Filtertransferfunktion wenigstens eines der räumlichen Teilbänder verschieden von den entsprechenden Magnituden der anderen räumlichen Teilbänder ist.

Band 0

Band 1

Band 2

Band 3

FIG 1

**Fig 2**

Fig 3

Fig 4

**Fig 5**

**Fig 6**